# EUROPÄISCHE PATENTANMELDUNG

(11) **EP 2 957 897 A1**
(43) Veröffentlichungstag der Anmeldung: **23.12.2015**
(21) Anmeldenummer: 14172742.0
(22) Anmeldetag: 17.06.2014
(51) Int. Cl.: G01N 21/51

(54) **Streulichtmesssystem mit Karussell für zylindrische oder eckige Probenhalter und einer Strahlblende für ungestreutes Licht, welche derart vergrössert ist, dass das vom Probenhalter gebrochene, ungestreute Licht aufgefangen wird**

(71) Anmelder: Siemens Healthcare Diagnostics Products GmbH, 35041 Marburg (DE)
(72) Erfinder: Beier, Axel, 16552 Schildow (DE); Meller, Paul, 61273 Wehrheim (DE); Nerreter, Stefan, 15754 Heidesee OT Blossin (DE)
(74) Vertreter: Maier, Daniel Oliver

(57) **Zusammenfassung**

Die Erfindung betrifft ein Streulichtmesssystem mit mindestens einer Lichtquelle (20) zur Erzeugung eines Strahlenbündels (34), einer Aufnahmevorrichtung für eine Messzelle (17) oder mehrere Messzellen und einen Photodetektor zur Aufnahme insbesondere von Streulicht aus der Messzelle (Nephelometrie). Erfindungsgemäß ist vorgesehen, dass die Messzelle (17) und das Strahlenbündel (34) derart relativ zueinander beweglich sind, dass das Strahlenbündel (34) auf einem bestimmten Wegabschnitt (37) durch die Messzelle wandert. Hinter der Messzelle (17) ist eine Sammeloptik (29) angeordnet, die das Strahlenbündel (34), welches nicht gemessen werden soll, auf eine vorzugsweise streifenförmig ausgebildete Zentralblende (24) wirft, so dass dieses nicht durch den Photodetektor registriert wird. Das zu messende Streulicht aus der Messzelle (17) gelangt mit seinem Hauptanteil jedoch an der Zentralblende (24) vorbei und kann durch den Photodetektor daher gemessen werden. Die Zentralblende (24) ermöglicht es daher vorteilhaft, dass sich das Strahlenbündel (34) und die Messzelle (17) während der Messung relativ zueinander bewegen können. Hierdurch wird die Effizienz des Messverfahrens, welches ebenfalls unter Schutz gestellt ist, vorteilhaft erhöht.

## Beschreibung

Die Erfindung betrifft ein Streulichtmesssystem mit mindestens einer Lichtquelle zur Erzeugung eines Strahlenbündels, mindestens einer Aufnahmevorrichtung für eine Messzelle und mindestens einem Photodetektor. Die Aufnahmevorrichtung und der Photodetektor sind im Strahlengang des von der Lichtquelle erzeugten Strahlenbündels angeordnet. Dies bedeutet, dass das von der Lichtquelle ausgehende Strahlenbündel durch die Messzelle geleitet wird und somit zur optischen Untersuchung eines in der Messzelle befindlichen Analyten zur Verfügung steht. Ein Messergebnis kann dann durch den ebenfalls im Strahlengang angeordneten Photodetektor registriert werden.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z. B. Transferarme mit Greiffunktion, Transportbänder oder drehbare Transporträder, sowie zum Transfer von Flüssigkeiten, wie z. B. Pipettiervorrichtungen. Auch ist es, wie in der DE 10 2009 043 524 A1 beschrieben, möglich, die Messeinrichtung des Analysegerätes beweglich auszuführen, während die Messzellen in ihren Aufnahmevorrichtungen unbeweglich bleiben. Geeignete Geräte umfassen eine Steuereinheit, die mittels entsprechender Software dazu in der Lage ist, die Arbeitsschritte für die gewünschten Analysen weitgehend selbstständig zu planen und abzuarbeiten.

Als Aufnahmevorrichtung im Zusammenhang dieser Erfindung soll eine Einrichtung verstanden werden, die einerseits eine Fixierung der Messzelle erlaubt und andererseits den für die Messzelle erforderlichen Bauraum einschließt. Durch diesen Bauraum, der als Teil der Aufnahmevorrichtung zu verstehen ist, verläuft auch das Strahlenbündel des Messlichtes. Die Messzelle kann auswechselbar oder bleibend in der Aufnahmevorrichtung fixiert sein. Eine bleibende Fixierung ermöglicht auch eine Integration der Messzelle in das Analysegerät (Durchflussmesszelle).

Viele der in derartigen Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen oder Teilchen, in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Insbesondere können moderne Analysegeräte mit einem Streulichtmesssystem ausgestattet sein. Mittels des Streulichtmesssystems lässt sich die Konzentration feinverteilter, kolloidaler Teilchen in Flüssigkeiten oder Gasen quantitativ bestimmen: Wird eine Suspension kleiner Partikel in einen Lichtstrahl verbracht, so wird ein Teil des eingetretenen Lichtes des Strahlenbündels des Lichtstrahls absorbiert, ein anderer Teil, auch als Primärstrahl bezeichnet, verlässt die Suspension ungestreut und wieder ein anderer Teil wird seitlich zum eintretenden Strahl gestreut. Bei der Streulichtmessung (z. B. Nephelometrie) wird dieses seitlich austretende Streulicht gemessen. Als Strahlenbündel soll im Rahmen dieser Anmeldung auch das Licht eines Laserstahls verstanden werden.

Die Streulichtmessung wird vor allem für den quantitativen oder qualitativen Nachweis von Analyten, beispielsweise Proteinen, eingesetzt, die sich bevorzugt mittels einer spezifische Bindungsreaktion zwischen zwei spezifischen Bindungspartnern, z.B. mittels Antigen-Antikörper-Bindung, nachweisen lassen. Bei einem quantitativen Nachweis wird die Menge, die Konzentration oder die Aktivität des Analyten in der Probe gemessen. Von dem Begriff des quantitativen Nachweises sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

Ein Streulichtmesssystem umfasst, wie in der DE 198 49 597 A1 beschrieben, üblicherweise mindestens ein Mittel zur Erzeugung eines Strahlenbündels, welches eine Lichtquelle, mindestens einen Photodetektor sowie mindestens eine Aufnahmevorrichtung für eine Messzelle umfasst. In dieser Bauweise können Lichtquelle, Aufnahmevorrichtung und Photodetektor derart angeordnet sein, dass der Photodetektor das gestreute Licht unter Winkeln oder Winkelbereichen um die Ausbreitungsrichtung des von der Lichtquelle ausgesandten Lichtstrahls erfasst, in denen die Intensität des Streulichts relativ hoch ist. Den Photodetektor erreicht in dieser Geometrie jedoch nicht nur das Streulicht, sondern auch der Primärstrahl. Da jedoch nur der gestreute Teil des Lichtes zum Messergebnis beitragen soll und Licht des Primärstrahls, das auf den Detektor trifft, letztlich nur zu einer Verschlechterung des Signal-Rausch-Abstandes führt, ist für eine Optimierung des Messergebnisses eine möglichst vollständige Ausblendung des Primärstrahls erforderlich. Hierfür wird eine optische Zentralblende eingesetzt. Diese wird mittels dünner Stege im Strahlengang gehalten und hinsichtlich ihrer Größe und Form so angepasst, dass sie einen möglichst großen Teil des Primärstrahls ausblendet, so dass möglichst ausschließlich Streulicht auf den Detektor trifft. Gemäß der DE 36 08 552 A1 können weitere Blenden eingesetzt werden, um das Streulicht noch besser vom Licht des Primärstahls zu trennen.

Die Aufgabe der Erfindung besteht darin, ein Streulichtmesssystem anzugeben, mit dem photometrische Messungen in möglichst kurzer Zeit auch an einer Vielzahl von Proben durchgeführt werden können. Die Aufgabe der Erfindung besteht weiterhin darin, ein Verfahren zum Betrieb eines solchen Streulichtmesssystems anzugeben, welches effizient auch mit einer Vielzahl von Proben durchgeführt werden kann.

Diese Aufgabe wird mit dem eingangs angegebenen Streulichtmesssystem erfindungsgemäß dadurch gelöst, dass die Aufnahmevorrichtung und das Strahlenbündel derart relativ zueinander beweglich sind, dass das Strahlenbündel bei der Bewegung auf einem vorbestimmten Weg lateral zur Strahlausbreitung durch die Messzelle wandert. Erfindungsgemäß ist mit anderen Worten vorgesehen, dass die Messung auch durchgeführt werden kann, während sich die Messzelle relativ zum Strahlenbündel bewegt. Hierzu müssen erfindungsgemäß jedoch folgende Vorkehrungen getroffen werden. Im Strahlengang hinter der Aufnahmevorrichtung (also hinter dem Bauraum der Aufnahmevorrichtung für die Messzelle und nach Einbau oder Einsetzen einer Messzelle auch hinter der Messzelle) ist eine Sammeloptik angeordnet, auf die das ungestreute Licht des Strahlenbündels fällt, wobei die Sammeloptik eine optische Fläche (d. h. eine sammeloptisch wirksame Fläche) zur Verfügung stellt, die zumindest in Richtung des Weges, also der lateralen Bewegung des Strahlenbündels, größere Abmessungen aufweist, als das Strahlenbündel selbst. Mit anderen Worten wird eine Ablenkung und/oder eine Lateralbewegung, die das ungestreute Licht des Strahlenbündels aufgrund der Relativbewegung zwischen der Messzelle und dem ungestreuten Licht des Strahlenbündel erfährt, durch die Abmessungen der Sammeloptik kompensiert, indem dieses zumindest über einen gewissen Wegabschnitt seines Weges hinweg immer auf die Sammellinse fällt. Weiterhin ist erfindungsgemäß vorgesehen, dass im Strahlengang hinter der Sammeloptik eine Zentralblende angeordnet ist, auf die das ungestreute Licht des Strahlenbündels innerhalb des schon genannten Wegabschnitts fällt. Mit anderen Worten wird das durch die Sammeloptik geleitete Strahlenbündel bei der lateralen Wanderung durch die Sammeloptik unterschiedlich abgelenkt, wobei die Geometrie der Zentralblende so angepasst ist, dass das Strahlenbündel während des definierten Wegabschnitts immer auf einen Teil ihrer Blendenfläche fällt.

Die erfindungsgemäße Ausgestaltung des Streulichtmesssystems hat den Vorteil, dass sich die Messzelle und das Strahlenbündel während der Messung relativ zueinander in lateraler Richtung des Strahlengangs bewegen können. Eine solche Relativbewegung kann entweder durch eine Bewegung der Messzelle durch den Strahlengang hindurch oder durch die Bewegung des Strahlenbündels, d.h. der das Strahlenbündel leitenden Baueinheit, erfolgen. Als Weg, den das Strahlenbündel durch die Messzelle nimmt, ist hierbei nicht der Weg des Lichtes entlang des Strahlengangs gemeint, sondern der Weg des Strahlenbündels lateral zu seiner Ausbreitungsrichtung. Die Strahlwanderung kommt dabei aufgrund der Relativbewegung zustande. Z.B. kann als Messzelle ein zylindrisches (insbesondere kreiszylindrisches) oder konisches Gefäß, wie z.B. eine Küvette, verwendet werden. Diese hat optisch die Wirkung einer Stablinse. Bei einer Relativbewegung zwischen Strahlenbündel und Messzelle kommt es daher zu einer von dem Wegabschnitt abhängigen Brechung des Strahlenbündels, was eine laterale Wanderung des Strahlenbündels auf der Zentralblende bewirkt. Aber auch, wenn die Messzelle eine ebene Eintrittsfläche und Austrittsfläche aufweist, kann es zu einer Strahlwanderung kommen, wenn diese Messzelle mit anderen auf einem Träger, wie beispielsweise einem Probenkarussell auf einer kreisförmigen Linie angeordnet ist. Damit liegt nämlich auch die Relativbewegung der Messzelle und des Strahlenbündels auf einer Kreisbahn, weswegen es auf dem Wegabschnitt zu einem Winkelversatz der Eintrittsfläche beziehungsweise der Austrittsfläche der Messzelle zum Strahlenbündel kommt.

Da die genannten Winkeländerungen oder auch ein reiner Lateralversatz auf dem Wegabschnitt des Strahlenbündels ausgeglichen werden können, kann eine Relativbewegung zwischen dem Strahlenbündel und der Messzelle gerade so schnell erfolgen, dass dieser Wegabschnitt während der Messung durch das Strahlenbündel nicht verlassen wird. Die erfindungsgemäße Gestalt der Zentralblende garantiert während der Messung, dass das ungestreute Licht des Strahlenbündels, also der Primärstrahl, während der gesamten Messzeit nicht auf den Photodetektor fällt. Besonders vorteilhaft ist es gemäß der Lösung der Aufgabe mit dem eingangs angegebenen Verfahren, wenn die Aufnahmevorrichtung und das Strahlenbündel auf dem Wegabschnitt mit einer konstanten Geschwindigkeit relativ zueinander bewegt werden. Dies ist steuerungstechnisch besonders leicht umzusetzen. Dabei kann beispielsweise eine optische Einheit, die die optischen Bauelemente des Streulichtmesssystems enthält, mit einer konstanten Geschwindigkeit bewegt werden, wobei mehrere Messzellen in einer geeigneten Konfiguration zueinander angeordnet sind. Alternativ kann auch der Probenträger, der die Messzellen in Aufnahmevorrichtungen lagert, mit konstanter Geschwindigkeit linear bewegt oder gedreht werden. Die Drehung lässt sich vorteilhaft besonders platzsparend realisieren, wobei mehrere Aufnahmevorrichtungen auf einem Träger in einem Kreis angeordnet sind und die Relativbewegung zwischen Strahlenbündel und den Aufnahmevorrichtungen durch eine Drehbewegung um den Kreismittelpunkt erzeugt wird.

Gemäß einer Ausgestaltung der Erfindung ist vorgesehen, dass die Zentralblende in dem bildseitigen Fokuspunkt der Sammeloptik angeordnet ist. In diesem Fall ist es möglich, die Zentralblende vorteilhaft mit einer geringen Blendenfläche auszustatten. Der Fokuspunkt wandert bei einer Wanderung des Strahlenbündels nämlich kaum oder sogar gar nicht, da das Strahlenbündel unabhängig davon, wo es auf die Sammeloptik fällt, im selben Punkt fokussiert wird. Eine kleine Blendenfläche, die vorzugsweise rund ausgeführt ist, hat den Vorteil, dass der Anteil des absorbierten Streulichts, der eigentlich gemessen werden soll, ebenfalls gering ist. Hierdurch lässt sich vorteilhaft ein gutes Signal-RauschVerhältnis erzielen.

Eine andere Ausgestaltung der Erfindung sieht vor, dass die Zentralblende außerhalb des bildseitigen Fokuspunktes der Sammeloptik angeordnet ist und zumindest in Richtung des Weges größere Abmessungen aufweist, als der ungestreute Teil des Strahlenbündels. Diese Konfiguration ist insbesondere dann von Vorteil, wenn der Strahlengang des Strahlenbündels parallel verläuft. Ein solches Strahlenbündel wird beispielsweise mittels eines Lasers erzeugt. Eine andere Möglichkeit besteht darin, dass ein divergentes Strahlenbündel bei Durchlaufen einer Sammeloptik in ein paralleles Strahlenbündel umgewandelt wird. Die Wanderung des Strahlenbündels wird in diesem Fall durch die Sammeloptik aufgefangen, jedoch nicht auf genau einen Punkt fokussiert. Die Zentralblende weist hierbei vorteilhaft eine ovale oder eine streifenförmige Blendenfläche auf, wobei auch die Ausführung als streifenförmige Blendenfläche nicht zwangsläufig rechteckig sein muss, sondern abgerundete Ecken aufweisen kann. Die Zentralblende wird im Strahlengang des Streulichtmesssystems so ausgerichtet, dass das Strahlenbündel entlang der Längenausdehnung der Blendenfläche wandert und auf dem Wegabschnitt durch die Zentralblende absorbiert wird.

Vorteilhaft kann die Sammeloptik aus zwei im Strahlengang hintereinander liegenden Sammellinsen gebildet sein. Dies hat den Vorteil, dass eine kurze Brennweite der Sammeloptik mit genügender Güte mit vergleichsweise kostengünstigen optischen Elementen erzeugt werden kann. Eine große Brennweite ist insbesondere dann erforderlich, wenn die Zentralblende sich im bildseitigen Fokuspunkt der Sammeloptik befinden soll.

Besonders vorteilhaft ist es, wenn in dem Streulichtmesssystem mehrere Aufnahmevorrichtungen auf einem Träger angeordnet sind. Dieser Träger kann beispielsweise eine Scheibe sein, auf der die Aufnahmevorrichtungen kreisförmig angeordnet sind. Allerdings ist auch eine lineare Anordnung möglich. Diese kann beispielsweise auf einem Förderband erfolgen. Das Förderband kann dann die mit den Messzellen bestückten Aufnahmevorrichtungen durch das Streulichtmesssystem führen. Bei der Ausführung des Trägers als Scheibe kann diese drehbar angeordnet sein, damit durch Drehung der Scheibe die Messzellen nacheinander durch das Streulichtmesssystem geführt werden können.

Besonders vorteilhaft ist es aber, wenn der Träger ortsfest gelagert ist. Dies hat den Vorteil, dass die Bestückung der Aufnahmevorrichtungen beispielsweise mittels eines Roboterarms einfach erfolgen kann. Dies ist auch möglich, während mit dem Streulichtmesssystem Messungen an Messzellen in anderen Aufnahmevorrichtungen zeitgleich erfolgen. Wenn der Träger ortsfest gelagert ist, müssen die optischen Elemente zur Erzeugung des Strahlenganges in einer Baueinheit zusammengefasst werden, die beweglich ist. Als optische Elemente sind alle die Funktionseinheiten des Streulichtmesssystems zu verstehen, die das Strahlenbündel erzeugen, leiten und das Streulicht registrieren, also die Lichtquelle, der Photodetektor, die erste und die zweite Sammeloptik und die Zentralblende sowie weitere optische Elemente, die im Strahlengang des Strahlenbündels vorgesehen sind. Die Baueinheit kann dann zu den einzelnen Messzellen hin bewegt werden. Da der Strahlengang in der Baueinheit verläuft, lässt sich damit die photometrische Untersuchung durchführen. In der Baueinheit ist eine Kavität vorgesehen, in die die Messzelle eingeführt werden kann.

Weitere Einzelheiten der Erfindung lassen sich der Zeichnung entnehmen. Gleiche oder sich entsprechende Zeichnungselemente sind in den einzelnen Figuren der Zeichnung jeweils mit den gleichen Bezugszeichen versehen und werden nur insoweit mehrfach erläutert, wie sich Unterschiede zwischen den einzelnen Figuren ergeben. Es zeigen
- Figur 1 und 2: ein Ausführungsbeispiel des erfindungsgemäßen Streulichtmesssystems im schematischen Längsschnitt und als schematische Aufsicht,
- Figur 3: ein anderes Ausführungsbeispiel des erfindungsgemäßen Streulichtmesssystems als schematische Aufsicht,
- Figur 4 bis 6: ein Ausführungsbeispiel des erfindungsgemäßen Verfahrens in unterschiedlichen Stadien als Aufsicht auf relevante Bauteile des Streulichtmesssystems und
- Figur 7 bis 9: ein anderes Ausführungsbeispiel des erfindungsgemäßen Verfahrens, ebenfalls als Aufsicht auf relevante Teile des erfindungsgemäßen Streulichtmesssystems, wobei hierbei auch die Bauteile gemäß den Figuren 4 bis 6 berücksichtigt werden müssen.

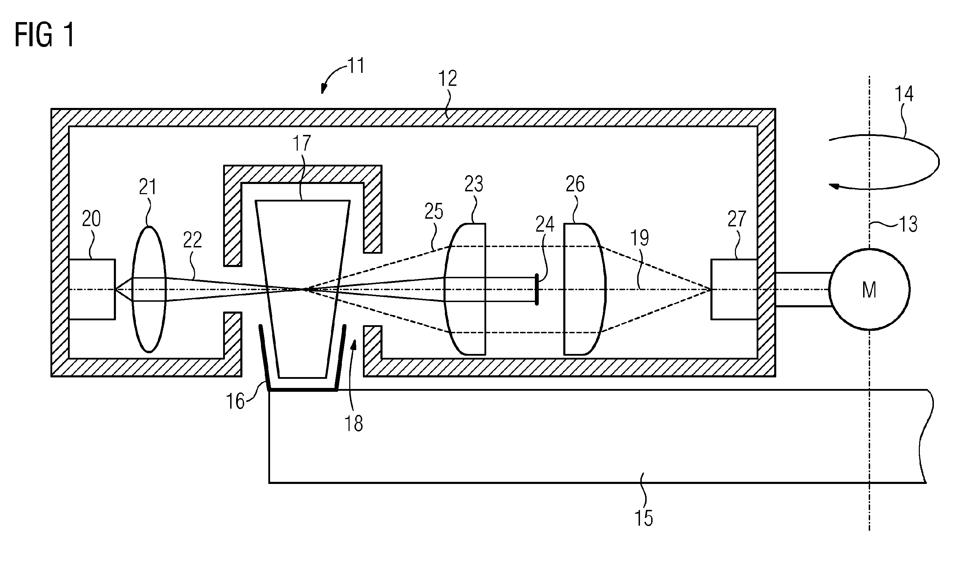

Ein Streulichtmesssystem gemäß Figur 1 weist eine Baueinheit 11 auf, in der die optischen Elemente für eine Streulichtmessung in einem Gehäuse 12 untergebracht sind. Diese Baueinheit 11 weist außerdem einen Motor M auf, der das Gehäuse 12 um eine Drehachse 13 in Richtung des Pfeils 14 drehen kann. Unterhalb des Gehäuses 12 ist ein Träger 15 in Form einer runden Platte derart angeordnet, dass die Drehachse 13 auch die Symmetrieachse des Trägers 15 ist. Auf dem Träger sind ringförmig Aufnahmevorrichtungen 16 angebracht, von denen eine in Figur 1 zu sehen ist. In der Aufnahmevorrichtung 16 befindet sich eine Messzelle 17 in Form einer Küvette, die in einer Kavität 18 des Gehäuses 11 Platz findet. Die Kavität 18 liegt außerdem im Strahlengang 19 für die optische Messung, die daher in der Messzelle 17 erfolgen kann.

Für die optische Messung weist das Streulichtmesssystem im Strahlengang 19 eine Lichtquelle 20 in Form einer Leuchtdiode auf, deren Licht über eine erste Sammellinse 21 in der Messzelle 17 fokussiert werden kann. Das Licht durchtritt die Messzelle, wobei ungestreutes Licht des erzeugten Strahlenbündels 22 als Primärstrahl die Messzelle verlässt und durch eine weitere Sammeloptik 23 in einen Parallelstrahl verwandelt wird. Dieser trifft auf eine Zentralblende 24 und wird dort absorbiert.

Durch ein in der Messzelle 17 befindlichen Analyten (nicht näher dargestellt) wird das Licht des Strahlenbündels 22 jedoch auch gestreut. Das entstandene Streulicht 25 wird durch die Sammeloptik 23 eingefangen und durch eine weitere Sammellinse 26 auf einen Photodetektor 27 fokussiert. Dort kann es als Messergebnis registriert werden.

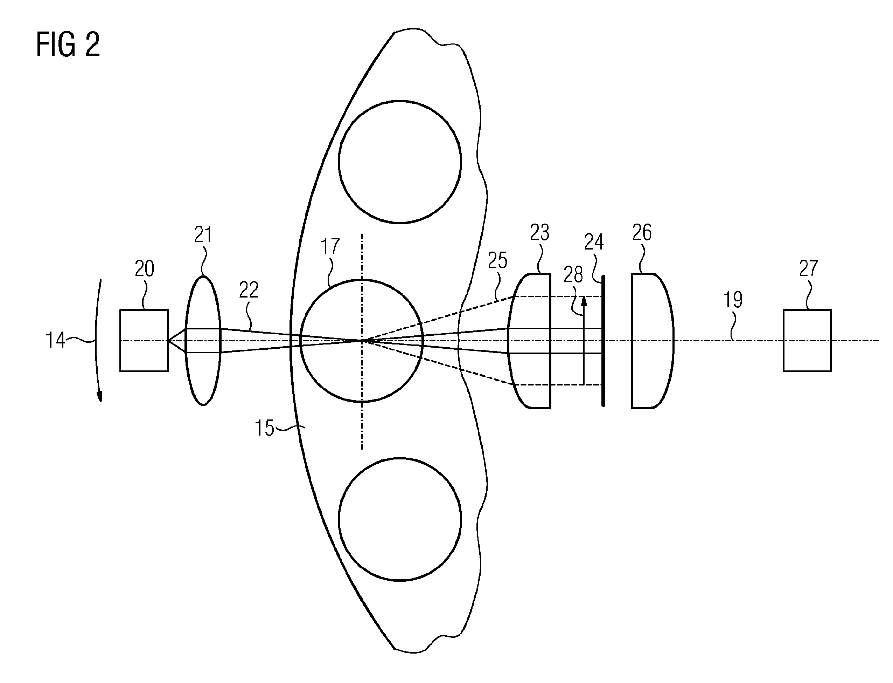

Der Figur 2 kann die Anordnung der optischen Elemente als Aufsicht entnommen werden. Zu erkennen ist ein Ausschnitt des Trägers 15 mit den Messzellen 17. Die Drehbewegung 14, die die Baueinheit 11 gemäß Figur 1 erfährt, ist ebenfalls in Figur 2 eingezeichnet. Diese bewirkt, wie im Folgenden noch näher erläutert wird, eine Wanderung des Auftreffbereiches des Strahlenbündels 22 auf der Fläche der Zentralblende 24 in Richtung des Pfeils 28. Zu erkennen ist weiterhin, dass die Zentralblende 24 in Richtung der Bewegung 28 des Strahlenbündels eine laterale Ausdehnung zum Strahlengang 19 aufweist, die in der Zeichenebene einen Teil des Streulicht 25, das gemessen werden soll, auffängt. Allerdings kann das Streulicht, wie in Figur 1 dargestellt, über und unter der Zentralblende 24 vorbeistrahlen.

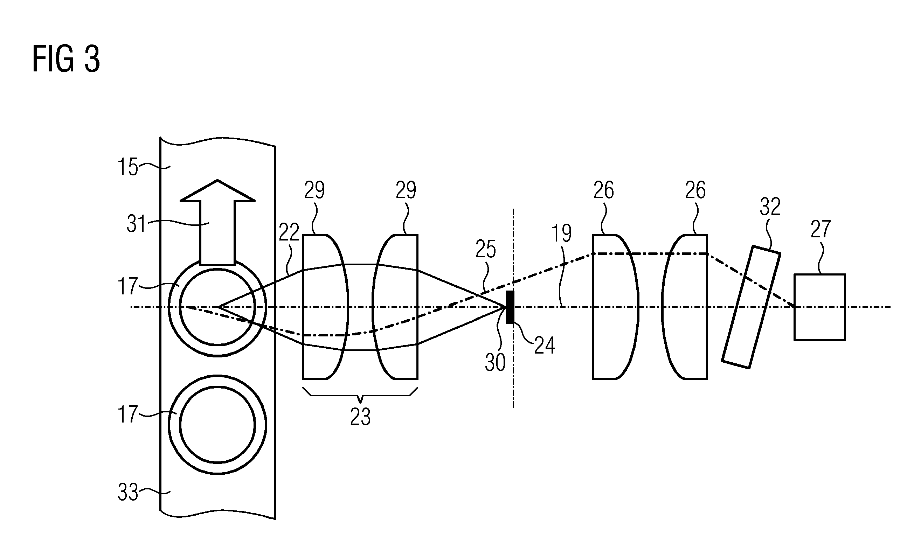

Eine kleinere Blendenfläche ist bei der Anordnung gemäß Figur 3 erforderlich (die nicht dargestellte Lichtquelle und dahinterliegende Sammellinse können wie im Aufbau gemäß Figur 1 und 2 ausgeführt sein). Hier ist zu erkennen, dass die erste Sammeloptik 23 aus zwei Sammellinsen 29 besteht. Zu erkennen ist weiterhin, dass das Strahlenbündel 22, welches ebenfalls in der Messzelle 17 fokussiert ist, durch die beiden Linsen 29 in einem Fokuspunkt 30 fokussiert wird, in dem eine Zentralblende 24 mit einer kleineren Blendenfläche als bei dem Ausführungsbeispiel gemäß Figur 1 und 2 angeordnet werden kann. Wie im Folgenden noch näher erläutert wird, befindet sich der Fokuspunkt 30 nämlich unabhängig von der Lage der Messzelle 17 im Strahlenbündel immer an derselben Stelle, wenn diese entlang des Pfeils 31 bewegt wird.

Weiterhin ist exemplarisch ein Strahl des Streulichts 25 dargestellt, der in der Messzelle gleich nach Eintritt des Strahlenbündels in die Messzelle 17 entsteht (eine Lichtquelle und das Strahlenbündel, welches von der Lichtquelle ausgeht und mittels einer Sammeloptik in der Messzelle 17 fokussiert wird, ist nicht dargestellt und kann analog zum Ausführungsbeispiel gemäß Figur 1 und 2 ausgeführt sein). Der Strahl des Streulichts wird durch die Sammeloptik 23 gebrochen und strahlt an der Zentralblende 30 vorbei. Die Sammellinsen 26 im weiteren Strahlengang 19 brechen den Lichtstrahl erneut, so dass er nach Durchtritt durch einen Tageslichtfilter 32 den Photodetektor 27 erreicht.

Die Messzellen 17 sind gemäß Figur 3 auf einem Förderband 33 untergebracht. Dieses wird linear in Richtung des Pfeils 31 bewegt. Hierbei kommt ebenfalls eine Relativbewegung zwischen der Messzelle 17 und dem Strahlenbündel 22 zustande.

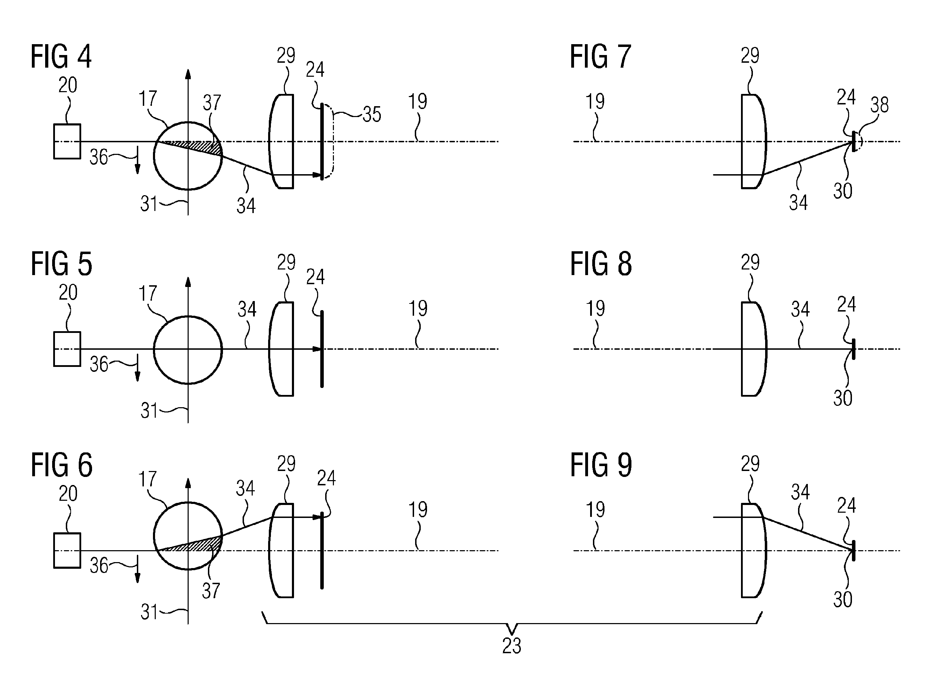

In den Figuren 4 bis 6 lässt sich ein bestimmter Strahl 34 des Strahlenbündels 22 gemäß Figur 1 verfolgen. Der Strahl 34 könnte auch einen Laserstrahl repräsentieren, der im Sinne der Erfindung auch als Strahlenbündel aufgefasst werden soll, wobei der Strahl 34 in diesem Falle einer der parallel verlaufenden Strahlen ist. Die Bewegung der Messzelle 17 durch das Strahlenbündel ist durch den Pfeil 31 dargestellt und kann mechanisch durch eine Vorrichtung gemäß Figur 1 oder eine Vorrichtung gemäß Figur 3 erzeugt werden. Der betrachtete Strahl 34 des Strahlenbündels trifft nach Durchtritt durch die Sammellinse 29 auf die Blende 24, welche eine streifenförmige Blendenfläche 35 mit abgerundeten Ecken aufweist. Diese ist in Figur 4 mit einer Strichpunktlinie angedeutet, wobei nur die halbe Blendenfläche dargestellt ist.

Durch die Relativbewegung entsprechend Pfeil 31 beschreibt der Lichtstrahl 34 einen Weg 36 durch die Messzelle 17, der lateral zur Strahlachse 19 ausgerichtet ist. Die Messzelle wirkt dabei wie eine Stablinse und bricht den Lichtstrahl 34, weswegen dieser nach Durchlaufen der Sammellinse nahe dem einen Rand der Zentralblende 24 auf selbige trifft und dort absorbiert wird (vergleiche Figur 4). Fällt der Lichtstrahl 34 auf die Mitte der Messzelle 17 wird dieser nicht gebrochen und trifft infolgedessen nach Durchlaufen der Sammellinse 29 auf die Mitte der Blende 24 (vergleiche Figur 5). Im weiteren Bewegungsverlauf wird der Lichtstrahl in die andere Richtung gebrochen und fällt infolgedessen auf das gegenüberliegende Ende der Zentralblende 24 (vergleiche Figur 6). Daraus folgt, dass die Längenausdehnung der Zentralblende 24 einen Wegabschnitt 37 definiert, innerhalb dessen das Strahlenbündel gemäß Figur 1 (welches durch den Lichtstrahl 34 repräsentiert wird) durch die Zentralblende 24 absorbiert wird und daher das Messergebnis nicht beeinflusst. Dieser Wegabschnitt 37 ist in den Figuren 4 und 6 als schraffierte Fläche innerhalb der Messzelle dargestellt, wobei deutlich wird, dass der Weg des Strahlenbündels in der Messzelle nicht geradlinig verläuft, wenn dieser einen runden Querschnitt aufweist. Dieser Weg ist eher als eine Kombination einer Linearbewegung und einer Schwenkbewegung zu beschreiben, wobei die Sammellinse 29 den Strahl zumindest im Wesentlichen wieder parallel zur Strahlachse ausrichtet.

Die Figuren 7 bis 9 muss der Betrachter sich jeweils als Ergänzung der Figuren 4 bis 6 vorstellen, wobei jeweils die Blende 24 in den Figuren 4 bis 6 bei dieser Betrachtung nicht vorhanden sein soll. Figur 7 ergänzt Figur 4, Figur 8 ergänzt Figur 5 und Figur 9 ergänzt Figur 6 durch geradlinige Verlängerung des Strahlenganges 19. Die Sammellinse 29 gemäß der Figuren 4 bis 6 wird jeweils durch eine weitere Sammellinse 29 gemäß der Figuren 7 bis 9 ergänzt, wobei jeweils beide Sammellinsen 29 eine Sammeloptik 23 gemäß Figur 3 ergeben. Der zwischen den Sammellinsen 29 parallel zur Strahlachse 19 ausgerichtete Lichtstrahl 34 wird durch die Sammellinse 29 gemäß der Figuren 7 bis 9 auf die Zentralblende 24 gemäß der Figuren 7 bis 9 fokussiert. Wie Figur 7 zu entnehmen ist, besitzt die Zentralblende 24 eine runde Blendenfläche 38 und weist eine geringere Fläche auf, als die Blende 24 gemäß Figur 4. Diese ist in Figur 7 mit einer Strichpunktlinie angedeutet, wobei nur die halbe Blendenfläche dargestellt ist. Die kleinere Blendenfläche kann realisiert werden, weil der Lichtstrahl 34 unabhängig davon, wo sich dieser innerhalb des Wegabschnitts 37 befindet, durch die Sammeloptik 23 einen einzigen Fokuspunkt 30 mit den anderen nicht dargestellten Lichtstrahlen des Strahlenbündels aufweist. (Diesen Punkt erreicht auch ein parallel ausgerichteter Laserstahl unabhängig von seiner Lage innerhalb des Wegabschnittes 37). Da die Blende 24 in diesem Fokuspunkt angeordnet ist, genügt eine vergleichsweise kleine Blendenfläche 38 der Zentralblende 24.

### Bezugszeichenliste

- 11: Gehäuse
- 12: Gehäuse
- 13: Drehachse
- 14: Pfeil, Drehbewegung
- 15: Träger
- 16: Aufnahmevorrichtungen
- 17: Messzelle
- 18: Kavität
- 19: Strahlengang
- 20: Lichtquelle
- 21: Sammellinse
- 22: Strahlenbündel
- 23: Sammeloptik
- 24: Zentralblende
- 25: Streulicht
- 26: Sammellinse
- 27: Photodetektor
- 28: Pfeil
- 29: Sammellinsen
- 30: Fokuspunkt
- 31: Pfeil
- 32: Tageslichtfilter
- 33: Förderband
- 34: Lichtstrahl
- 35: Blendenfläche
- 36: Weg
- 37: Wegabschnitt
- 38: Blendenfläche

## Patentansprüche

1. Streulichtmesssystem mit mindestens einer Lichtquelle (20) zur Erzeugung eines Strahlenbündels (22), mindestens einer Aufnahmevorrichtung (16) für eine Messzelle (17) und mindestens einem Photodetektor (27), wobei die Aufnahmevorrichtung (16) und der Photodetektor (27) im Strahlengang des von der Lichtquelle (20) erzeugten Strahlenbündels (22) angeordnet sind,
**dadurch gekennzeichnet, dass**
- die Aufnahmevorrichtung (16) und das Strahlenbündel (22) derart relativ zueinander beweglich sind, dass das Strahlenbündel (22) bei der Bewegung auf einem vorbestimmten Weg (36) lateral zur Stahlausbreitung durch eine in der Aufnahmevorrichtung (16) angeordnete Messzelle wandert,
- im Strahlengang hinter der Aufnahmevorrichtung (16) eine Sammeloptik (23) angeordnet ist, auf die das ungestreute Licht des Strahlenbündels (22) fällt, wobei die Sammeloptik (23) eine optische Fläche zur Verfügung stellt, die zumindest in Richtung des Weges (36) größere Abmessungen aufweist, als das ungestreute Licht des Strahlenbündels (22) und
- im Strahlengang hinter der Sammeloptik eine Zentralblende (24) angeordnet ist, auf die das ungestreute Licht des Strahlenbündels (22) innerhalb eines bestimmten Wegabschnittes (37) des Weges (36) fällt.

2. Streulichtmesssystem nach Anspruch 1,
**dadurch gekennzeichnet, dass** die Zentralblende (24) in dem bildseitigen Fokuspunkt der Sammeloptik (23) angeordnet ist.

3. Streulichtmesssystem nach Anspruch 2,
**dadurch gekennzeichnet, dass** die Zentralblende (24) eine runde Blendenfläche (38) aufweist.

4. Streulichtmesssystem nach Anspruch 1,
**dadurch gekennzeichnet, dass** die Zentralblende (24) außerhalb des bildseitigen Fokuspunktes der Sammeloptik (23) angeordnet ist und zumindest in Richtung des Weges (36) größere Abmessungen aufweist, als das Strahlenbündel in der Ebene der Zentralblende.

5. Streulichtmesssystem nach Anspruch 4,
**dadurch gekennzeichnet, dass** die Zentralblende (24) eine ovale oder eine streifenförmige Blendenfläche (35) aufweist.

6. Streulichtmesssystem nach einem der voranstehenden Ansprüche,
**dadurch gekennzeichnet, dass** mehrere Aufnahmevorrichtungen (16) auf einem Träger (15) angeordnet sind.

7. Streulichtmesssystem nach Anspruch 6,
**dadurch gekennzeichnet, dass** der Strahlengang in einer Baueinheit (11) verläuft, die relativ zu den auf dem Träger (15) befindlichen Aufnahmevorrichtungen (16) beweglich ist.

8. Streulichtmesssystem nach einem der voranstehenden Ansprüche,
**dadurch gekennzeichnet, dass** die Sammeloptik (23) aus zwei im Strahlengang hintereinander liegenden Sammellinsen (29) gebildet ist.

9. Verfahren zum Betrieb eines Streulichtmesssystems nach einem der voranstehenden Ansprüche,
**dadurch gekennzeichnet, dass** die Aufnahmevorrichtung (16) und das Strahlenbündel (22) auf dem bestimmten Wegabschnitt (37) des Weges (36) mit einer konstanten Geschwindigkeit relativ zueinander bewegt werden.

10. Verfahren nach Anspruch 9,
**dadurch gekennzeichnet, dass** mehrere Aufnahmevorrichtungen (16) auf einem Träger (15) auf einem Kreis angeordnet sind und die Relativbewegung zwischen Strahlenbündel (22) und den Aufnahmevorrichtungen (16) durch eine Drehbewegung um den Kreismittelpunkt erzeugt wird.
